Europäisches Patentamt

European Patent Office

Office européen des brevets

(19)

(11) **EP 1 195 873 A1**

(12) **EUROPÄISCHE PATENTANMELDUNG**

(43) Veröffentlichungstag:
   **10.04.2002 Patentblatt 2002/15**

(51) Int Cl.⁷: **H02H 3/40**

(21) Anmeldenummer: **00810924.1**

(22) Anmeldetag: **06.10.2000**

| | |
|---|---|
| (84) Benannte Vertragsstaaten: **AT BE CH CY DE DK ES FI FR GB GR IE IT LI LU MC NL PT SE** Benannte Erstreckungsstaaten: **AL LT LV MK RO SI** | • **Rüegg, Walter** **5304 Endingen (CH)** • **Weltmann, Klaus-Dieter** **5405 Baden-Dättwil (CH)** • **Niemeyer, Lutz** **5242 Birr (CH)** • **Pietsch, Ralf-Dieter** **01936 Oberlichtenau (DE)** |
| (71) Anmelder: **ABB RESEARCH LTD.** **8050 Zürich (CH)** | |
| (72) Erfinder: • **Stanimirov, Michael** **5400 Baden (CH)** • **Deck, Bernhard** **79809 Weilheim (DE)** | (74) Vertreter: **ABB Patent Attorneys** **c/o ABB Schweiz AG** **Brown Boveri Strasse 6** **5400 Baden (CH)** |

(54) **Verfahren zum Schützen einer Stromleitung**

(57)   Zum Schutz einer Stromleitung (1) werden Strom- und Spannungswerte (uk, ik) gemessen. In einem adaptiven Schätzer werden alle in einem Messfenster liegenden Werte analysiert und in Impedanzwerte (Z) umgerechnet. Die Leitung (1) wird abgeschaltet, wenn die Impedanzwerte (Z) unzulässige Werte annehmen. Um die Reaktionszeit zu verkürzen, wird ein Warnsignal (W) erzeugt, wenn auf der Leitung (1) starke Hochfrequenzsignale detektiert werden. Bei Auftreten des Warnsignals (W) wird das jeweilige Messfenster so gelegt, dass dessen Start auf den Zeitpunkt des Warnsignals (W) zu liegen kommt, und/oder das jeweilige Messfenster wird verkürzt.

Fig. 1

**Beschreibung**

Technisches Gebiet

Die Erfindung betrifft ein Verfahren zum Schützen einer Stromleitung, insbesondere bei Kurzschlüssen, gemäss Oberbegriff von Anspruch 1. Derartige Verfahren werden benutzt, um eine Stromleitung beim Auftreten eines Kurzschlusses, d.h. einer unzulässig kleinen Impedanz gegen Erde oder gegen andere Phasen, abzuschalten. Unter Stromleitungen sind dabei insbesondere Sammelschienen, Starkstromleitungen, Überlandleitungen oder andere Strom führende Teile zu verstehen.

Stand der Technik

In konventionellen Verfahren zum Schützen einer Stromleitung wird mit einem adaptiven Schätzer aus mehreren Messpunkten von Strom und Spannung ein Impedanzwert der Leitung gegen Masse oder eine andere Phase ermittelt. Der adaptive Schätzer misst dabei in einem zeitlichen Messfenster mehrere Datenpunkte des Stroms und der Spannung und errechnet aus deren Verlauf den Real- und Imaginärteil der Impedanz. Sodann wird geprüft, ob der Impedanzwert in einem verbotenen Bereich, dem sog. Auslösebereich, liegt. Falls ja, so wird die Leitung abgeschaltet.

Beim Schutz von Stromschienen können bei derartigen Verfahren z.B. mit Distanzschutz, Signalvergleichsverfahren und sog. rückwärtiger Verriegelung abhängig von Gerät und Fehler Detektionszeiten im Bereich von 40 bis 60 ms erreicht werden.

Darstellung der Erfindung

Es stellt sich die Aufgabe, ein Verfahren der eingangs genannten Art bereitzustellen, dass ohne grossen Aufwand schnelle Detektionszeiten gewährleistet.

Diese Aufgabe wird vom Verfahren gemäss Anspruch 1 erfüllt.

Erfindungsgemäss wird also ein Warnsignal erzeugt, welches aus einem für das Auftreten eines Kurzschlusses typischen Indiz abgeleitet wird. Beim Auftreten dieses Warnsignals wird das Messfenster neu gestartet und/oder verkürzt, so dass möglichst bald ein erster Schätzwert für die Impedanz vorliegt. Dies erlaubt es, auf Kurzschlusszustände schneller zu reagieren.

Das Warnsignal kann ausgelöst werden, wenn auf der Leitung ein Hochfrequenzssignal detektiert wird, das einen vorgegebenen Schwellwert überschreitet. Ein derartiges Signal wird von einem Leader erzeugt, d.h. einem Stromimpuls von in der Regel etwa einigen Hundert Nanosekunden Länge und einer Höhe von etwa einigen Ampère. Zusätzlich hierzu kann das Warnsignal von weiteren Kriterien abhängig gemacht werden, z.B. davon, ob aufeinander folgende Messpunkte um mehr als einen vorgegebenen Sprungwert auseinander liegen, oder ob das vom Schätzer verwendete Modell eine Inkonsistenz der Messwerte anzeigt.

Da das Warnsignal einen Hinweis auf das Vorliegen eines Kurzschlusses bietet, kann es auch bei der Entscheidung berücksichtigt werden, ob der Schalter unterbrochen werden soll.

Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:

Fig. 1 ein Blockdiagramm einer Schutzschaltung,
Fig. 2 eine Darstellung der komplexen Ebene der Impedanzwerte,
Fig. 3 die Positionierung und Länge der Messfenster vor und nach Auftreten eines Warnsignals und
Fig. 4 eine Leitung mit beidseitigen Schutzschaltungen.

Wege zur Ausführung der Erfindung

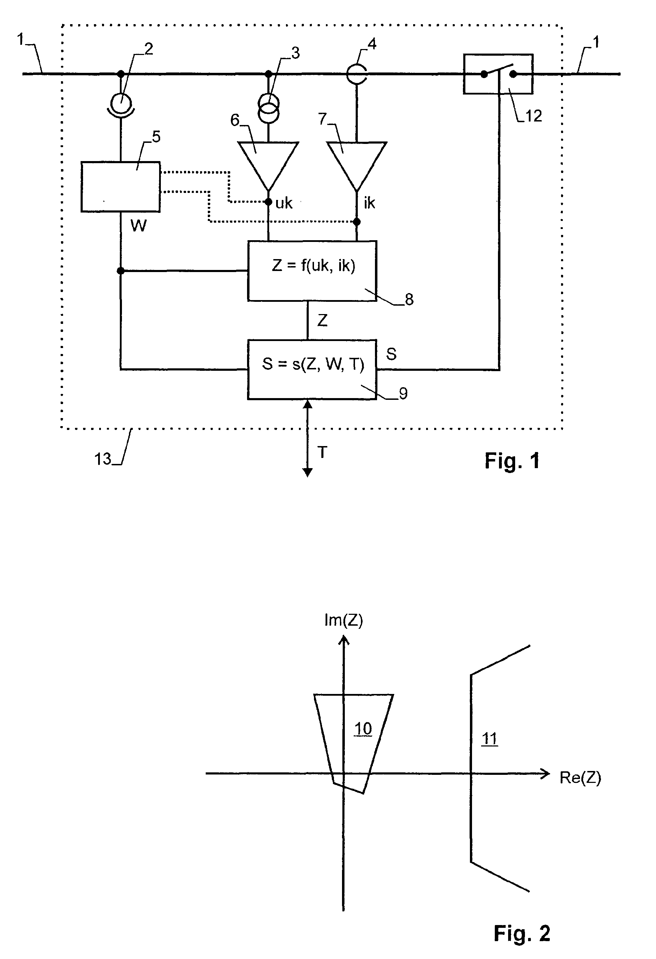

Fig. 1 zeigt einen möglichen Aufbau der Schutzschaltung 13 gemäss vorliegender Erfindung. Zweck dieser Schaltung ist es, eine Stromleitung 1 zu überwachen. Hierzu sind an der Leitung 1 drei Sensoren 2, 3, 4 angeordnet.

Ein kapazitiv angekoppelter Hochfrequenzsensor 2 (sog. PD-Sensor oder Teilentladungssensor) mit nachfolgender Aufbereitungsschaltung 5 detektiert plötzlich auftretende Signale im kHz- oder MHz-Bereich, deren Amplitude einen gewissen Schwellwert überschreitet. Derartige Signale begleiten in der Regel eine plötzliche Änderung der Impedanz Z der Leitung. Bei auftreten eines derartigen Signals wird ein Warnsignal W erzeugt. Der Hochfrequenzsensor kann wie ein Teilentladungssensor aufgebaut sein und zusätzlich auch noch dessen Aufgaben übernehmen.

Ein Spannungssensor 3 mit nachfolgender Aufbereitungsschaltung 6 misst in regelmässigen Zeitabständen die Spannung auf der Leitung 1 und erzeugt entsprechende Spannungswerte $u_k$ (k = 1, 2, ...).

Ein Stromsensor 4 mit nachfolgender Aufbereitungsschaltung 7 misst in regelmässigen Zeitabständen den Strom auf der Leitung 1 und erzeugt entsprechende Stromwerte $i_k$ (k = 1, 2, ...).

Die Messpunkte mit den Spannungswerten $u_k$ und den Stromwerten $i_k$ und das Warnsignal W werden einem Schätzer 8 zugeführt. Dieser ermittelt aus einer vorgegebenen Zahl n aufeinander folgender, in einem Messfenster liegender Strom- und Spannungswerte $i_1 ... i_n$ und $u_1 ... u_n$ einen Schätzwert für die Impedanz Z der Leitung 1

$$Z = f(i_1 \ldots i_n, u_1 \ldots u_n).$$

Die Zahl n bezeichnet die Länge des Messfensters. Z ist eine komplexe Zahl. Geeignete Funktionen f sind dem Fachmann bekannt.

Beispielsweise kann f so gestaltet sein, dass alle n Messpunkte innerhalb des Messfensters mit gleichem Gewicht in das Resultat Z einfliessen, oder dass zeitlich weiter zurückliegende Messpunkte weniger stark gewichtet werden.

Es sind auch iterative bzw. rekursive Schätzverfahren bekannt, z.B. sog. RLS-Verfahren ("Recursive Least Square"), bei welchen der Wert von n theoretisch unendlich gross ist, weit zurück liegende Messpunkte das Resultat praktisch jedoch nicht mehr beeinflussen. Im Kontext dieser Beschreibung wird auch bei derartigen Verfahren von einer "Länge des Messfensters" gesprochen. Die Länge entspricht dabei einer typischen Länge des Abfalls des Einflusses der einzelnen Messpunkte auf das Resultat. Sie kann z.B. definiert sein als die Zahl der Punkte, bei denen eine Wertänderung von 50% noch zu einer Änderung von Z von mindestens 10% führt.

Der Schätzer 8 erzeugt aus der Funktion f für aufeinander folgende, sich gegebenenfalls auch überlappende, Messfenster entsprechende Schätzwerte $Z_1$, $Z_2$, ... für die Impedanz Z.

Die Impedanzwerte $Z_i$ werden, wie auch das Warnsignal W, einer Schaltersteuerung 9 zugeführt. Diese analysiert die Impedanzwerte $Z_i$, z.B. indem sie sie mit vorgegebenen Bereichen in der komplexen Ebene vergleicht. Dies ist in Fig. 2 illustriert. Hier sind in der komplexen Ebene zwei Bereiche markiert: Ein Auslösebereich 10 umfasst den Bereich unzulässiger Impedanzwerte, ein Betriebsbereich 11 den Bereich normaler Impedanzwerte. Stellt die Schaltersteuerung fest, dass mehrere aufeinander folgende Impedanzwerte $Z_i$ im Auslösebereich liegen, so wird ein Schaltersignal S erzeugt, um die Leitung 1 mit einem Schutzschalter 12 zu unterbrechen.

Es gibt verschiedene Verfahren, die Lage der Impedanzwerte $Z_i$ im Diagramm nach Fig. 2 zu analysieren. Beispielsweise können zu deren Analyse Techniken aus der Mustererkennung eingesetzt werden, so dass typische zulässige und unzulässige Bewegungsmuster der Impedanzwerte voneinander unterschieden werden können. Besonders geeignet zur Auswertung derartiger Muster sind Schaltungen basierend auf neuronalen Netzwerken.

Die Schaltersteuerung 9 verfügt ferner über einen Ein- und Ausgang T (TRIP), über den sie Angaben über den jeweiligen Zustand mit anderen Schutzschaltungen 13 und gegebenenfalls einer zentralen Überwachungsstelle austauschen kann.

Das Warnsignal W wird verwendet, um unzulässige Impedanzwerte möglichst schnell zu erkennen. Wie bereits erwähnt, zeigt das Warnsignal W hochfrequente Störsignale auf der Leitung 1 an, welche für das Auftreten plötzlicher Impedanzänderungen, z.B. bei einem Kurzschluss, typisch sind.

Wird ein Warnsignal W detektiert, so werden im Schätzer 8 alternativ oder kombiniert folgende Massnahmen ergriffen:

A: Das Messfenster wird so gelegt, dass sein Anfang im wesentlichen auf den Zeitpunkt des Warnsignals W zu liegen kommt. Beispielsweise beginnt es mit denjenigen Strom- und Spannungswerten $i_k$, $u_k$, die als erste nach dem Warnsignal gemessen wurden. Diese Massnahme gewährleistet, dass im Wesentlichen nur Strom- und Spannungswerte innerhalb des Messfensters liegen, die zum Kurzschlusszustand gehören und dadurch zum frühstmöglichen Zeitpunkt eine Impedanz Z basierend auf Messwerten nach Auftreten des Warnsignals ermittelt wird.

B: Die Länge n des Messfensters wird, verglichen mit dem Normalbetrieb, gekürzt. Dies beeinträchtigt zwar die Messgenauigkeit, erlaubt es aber, schneller erste Resultate zu erhalten. Handelt es sich um ein Schätzverfahren, bei welchem der Einfluss älterer Messpunkte auf das Resultat kontinuierlich absinkt, kann hierzu die Absinkrate erhöht bzw. die Gewichtung älterer Punkte reduziert werden. Bei rekursiven Verfahren kann zu diesem Zweck z.B. eine Neuinitialisierung der Iteration stattfinden.

Beide diese Massnahmen sind in Fig. 2 schematisch illustriert. In dieser Figur bezeichnen Z1, Z2, Z3 ... die einzelnen Messfenster und die daraus ermittelten Impedanzwerte. Wie ersichtlich, wurde im Messfenster von Z3 ein Warnsignal W ausgelöst. Entsprechend wurde das Messfenster Z3 abgebrochen und ein neues, verkürztes Messfenster Z4 gestartet, um möglichst schnell gültige Resultate zu erhalten. Die nachfolgenden Messfenster Z5 bis Z7 werden z.B. zunehmend länger, bis der Normalzustand wieder erreicht wird.

Das Warnsignal W wird auch der Schaltersteuerung 9 zugeführt. Diese berücksichtigt, dass das Auftreten eines Warnsignals ein Indiz für einen Kurzschluss ist und verwendet diese Information beim Erzeugen des Schaltersignals S, d.h. das Schaltersignal S ist nicht nur von der Impedanz Z, sondern auch vom Warnsignal W abhängig. Ferner ist es auch, wie weiter unten beschrieben, von den über Eingang T zugeführten Werten abhängig. Dies kann in folgender Form ausgedrückt werden:

$$S = s(Z, W, T)$$

Dabei beschreibt s ein "Unzulässigkeits-Kriterium" und ist eine Funktion der Impedanz Z bzw. Impedanzwerte $Z_i$, des Eingangs T und des Warnsignals W.

So kann z.B. nach Auftreten eines Warnsignals der Schutzschalter 12 bereits nach wenigen unzulässigen Impedanzwerten $Z_k$ unterbrochen worden, da klare Anzeichen für einen Kurzschluss vorliegen. Trat kein Warnsignal auf, so findet eine Unterbrechung des Schutzschalters 12 erst nach Auftreten einer grösseren Zahl unzulässiger Impedanzwerte statt. Somit wird das Unzulässigkeits-Kriterium s nach Auftreten eines Warnsignals W schneller erfüllt als ohne Warnsignal.

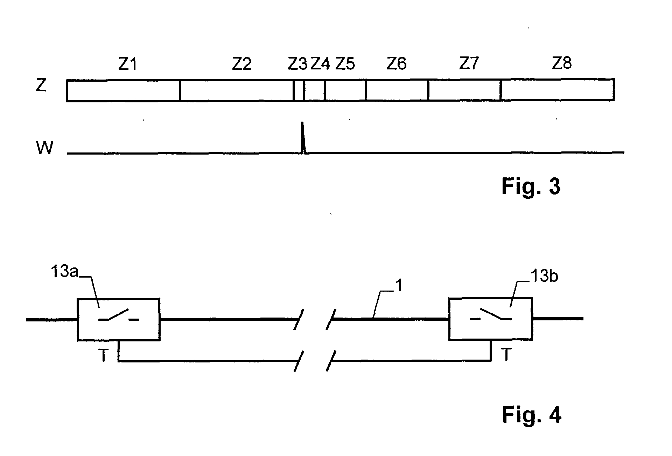

Fig. 3 zeigt eine mögliche Verwendung des Ein- bzw. Ausgangs T. Hier wird eine Leitung 1 an ihren Enden von je einer Schutzschaltung 13a, 13b überwacht. Die Schutzschaltungen 13a, 13b tauschen über ihre Ein- bzw. Ausgänge T Daten aus. Bei Auftreten eines Kurzschlusses in der Nähe der ersten Schutzschaltung 13a reagiert diese sofort, da sie sehr tiefe Impedanzwerte misst. Da der Kurzschluss jedoch relativ weit entfernt von der zweiten Schutzschaltung 13b ist, reagiert letztere nicht so schnell, da bei ihr weniger tiefe Impedanzwerte erreicht werden. Sie erhält jedoch über Ein/Ausgang T von der ersten Schutzschaltung die Information, dass ein Kurzschluss vorliegt. Dies erlaubt ihr, auch ihren Schutzschalter sofort zu unterbrechen.

Entsprechende Konfigurationen wie jene gemäss Fig. 3 können auch zur Überwachung von Stromschienen eingesetzt werden. In diesem Falle werden in der Regel mehr als zwei Schutzschaltungen 13 zusammenwirken.

Im soweit beschriebenen Ausführungsbeispiel wurde das Warnsignal W nur ausgelöst, wenn ein Hochfrequenzsignal einer gewissen Stärke detektiert wurde. Zusätzlich kann zum Auslösen des Warnsignals W verlangt werden, dass die Länge des Hochfrequenzsignals eine vorgegebene Schwelllänge überschreitet.

Es ist jedoch auch möglich, das Warnsignal W von den Strom- und Spannungswerten $i_k$ bzw. $u_k$ abhängig zu machen, wie dies in Fig. 1 durch gestrichelte Linien angedeutet ist.

Hierzu werden z.B. die Differenzen

$$\Delta i_k = |i_k - i_{k-1}|$$

$$\Delta u_k = |u_k - u_{k-1}|$$

zwischen aufeinander folgenden Strom- und Spannungswerten mit maximalen Sprungwerten $\Delta i_{max}$ bzw. $\Delta u_{max}$ verglichen. Steigt eine oder beide der Differenzen über den jeweiligen Sprungwert, so wird das Warnsignal W ausgelöst, da auch schnell ändernde Strom- und Spannungswerte ein Indiz für einen Kurzschluss sind.

Weiter ist es z.B. möglich, im Schätzer 8 Inkonsistenzen der Messwerte festzustellen, indem z.B. ein Stromwert mit dem zuletzt erhaltenen Impedanzwert multipliziert und mit dem nächsten Spannungswert verglichen wird. Starke Abweichungen der Messwerte von einem derartigen Modell sind auch Hinweise auf das Entstehen eines Kurzschlusses.

Die Komponenten der Schutzschaltung 13, und insbesondere der Schätzer 8, die Schaltersteuerung 9 sowie die Aufbereitungsschaltung 5 für das Warnsignal können in Hard- und/oder Software ausgestaltet sein und als einzelne Einheiten oder als gemeinsamer Funktionsblock ausgebildet werden.

Bezugszeichenliste

| | |
|---|---|
| 1: | Stromleitung |
| 2: | Hochfrequenzsensor |
| 3: | Spannungssensor |
| 4: | Stromsensor |
| 5: | Aufbereitungsschaltung für Warnsignal |
| 6: | Aufbereitungsschaltung für Spannungssensor |
| 7: | Aufbereitungsschaltung für Stromsensor |
| 8: | Schätzer |
| 9: | Schaltersteuerung |
| 10: | Auslösebereich |
| 11: | Betriebsbereich |
| 12: | Schutzschalter |
| 13, 13a, 13b: | Schutzschaltung |
| $i_k$: | Stromwerte |
| n: | Länge des Messfensters |
| s: | Unzulässigkeits-Kriterium |
| S: | Schaltersignal |
| T: | Kommunikationsweg zu anderen Schutzschaltungen |
| $u_k$: | Spannungswerte |
| W: | Warnsignal |
| Z: | Impedanz |
| $Z_i$: | Impedanzwerte |

**Patentansprüche**

**1.** Verfahren zum Schützen einer Stromleitung (1), insbesondere bei Kurzschlüssen, bei welchem mit einem adaptiven Schätzer (8) aus Messpunkten ($i_k$, $u_k$) in Messfenstern Impedanzwerte ($Z_i$) ermittelt werden, wobei jedes Messfenster mehrere Messpunkte enthält, und wobei die Leitung (1) abgeschaltet wird, wenn die Impedanzwerte (Z) ein Unzulässigkeits-Kriterium (s) erfüllen, **dadurch gekennzeichnet, dass** ein Warnsignal (W) nur erzeugt wird, wenn auf der Leitung (1) ein Hochfrequenzsignal überschreitend einen vorgegebenen Schwellwert detektiert wird, und dass bei Auftreten des Warnsignals (W) das jeweilige Messfenster so gelegt wird, dass dessen Start im wesentlichen auf einen Zeitpunkt des Warnsignals (W) zu liegen kommt, und/oder dass bei Auftreten des Warnsignals (W) das jeweilige Messfenster im Vergleich zu einem Normalbetrieb verkürzt wird.

2. Verfahren nach Anspruch 1, **dadurch gekennzeichnet, dass** jeder Messpunkt ($i_k$, $u_k$) je einen Strom-($i_k$) und einen Spannungswert ($u_k$) der Leitung (1) enthält.

3. Verfahren nach einem der vorangehenden Ansprüche, **dadurch gekennzeichnet, dass** mehrere aufeinander folgende Impedanzwerte ($Z_i$) analysiert werden um das Vorliegen eines Kurzschlusses zu detektieren.

4. Verfahren nach einem der vorangehenden Ansprüche, **dadurch gekennzeichnet, dass** das Unzulässigkeits-Kriterium (s) abhängig ist vom Warnsignal (W), derart, dass nach Auftreten eines Warnsignals das Unzulässigkeits-Kriterium schneller erfüllt ist als ohne Warnsignal.

5. Verfahren nach einem der vorangehenden Ansprüche, **dadurch gekennzeichnet, dass** an der Stromleitung (1) in mindestens zwei Schutzschaltungen (13a, 13b) Messpunkte ($i_k$, $u_k$) ermittelt und Warnsignale (W) erzeugt werden, wobei zwischen den zwei Schutzschaltungen (13a, 13b) Daten ausgetauscht werden, ob einer der Schutzschaltungen einen Kurzschluss festgestellt hat, so dass auch die andere Schutzschaltung die Leitung unterbricht.

6. Verfahren nach einem der vorangehenden Ansprüche, **dadurch gekennzeichnet, dass** das Warnsignal (W) erzeugt wird, wenn auf der Leitung (1) ein Hochfrequenzsignal mit einer Länge überschreitend einen vorgegebene Schwelllänge detektiert wird.

7. Verfahren nach einem der vorangehenden Ansprüche, **dadurch gekennzeichnet, dass** ein Warnsignal (W) erzeugt wird, wenn Werte aufeinander folgender Messpunkte um mehr als einen vorgegebenen Sprungwert ($\Delta i_{max}$, $\Delta u_{max}$) auseinander liegen.

**Fig. 1**

**Fig. 2**

Z    Z1          Z2      Z3 Z4 Z5    Z6      Z7        Z8

W

**Fig. 3**

13a                              1              13b

T                                          T

**Fig. 4**

| | | Europäisches Patentamt | **EUROPÄISCHER RECHERCHENBERICHT** | | Nummer der Anmeldung<br>EP 00 81 0924 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 196 05 025 A (SIEMENS AG)<br>14. August 1997 (1997-08-14)<br>* Seite 5, Zeile 10 – Zeile 67;<br>Abbildungen 1-3 *<br>___ | 1 | H02H3/40 |
| A | XIA Y Q ET AL: "DEVELOPMENT AND IMPLEMENTATION OF A VARIABLE-WINDOW ALGORTITHM FOR HIGH-SPEED AND ACCURATE DISTANCE PROTECTION"<br>IEE PROCEEDINGS: GENERATION, TRANSMISSION AND DISTRIBUTION,GB,INSTITUTION OF ELECTRICAL ENGINEERS,<br>Bd. 141, Nr. 4, PART C,<br>1. Juli 1994 (1994-07-01), Seiten 383-389,<br>XP000480867<br>ISSN: 1350-2360<br>* Absatz '02.2! – Absatz '02.3! *<br>___ | 1 | |
| A | US 5 838 525 A (UDREN ERIC ET AL)<br>17. November 1998 (1998-11-17)<br>* Spalte 4, Zeile 15 – Zeile 49 *<br>____ | 1 | RECHERCHIERTE SACHGEBIETE (Int.Cl.7)<br><br>H02H |

Der vorliegende Recherchenbericht wurde für alle Patentansprüche erstellt

| Recherchenort | Abschlußdatum der Recherche | Prüfer |
|---|---|---|
| BERLIN | 30. März 2001 | Hijazi, A |

## ANHANG ZUM EUROPÄISCHEN RECHERCHENBERICHT
## ÜBER DIE EUROPÄISCHE PATENTANMELDUNG NR.

EP 00 81 0924

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-03-2001

| Im Recherchenbericht angeführtes Patentdokument | | Datum der Veröffentlichung | Mitglied(er) der Patentfamilie | | Datum der Veröffentlichung |
|---|---|---|---|---|---|
| DE 19605025 | A | 14-08-1997 | CN<br>WO<br>EP<br>US | 1210629 A<br>9728594 A<br>0878045 A<br>6046895 A | 10-03-1999<br>07-08-1997<br>18-11-1998<br>04-04-2000 |
| US 5838525 | A | 17-11-1998 | KEINE | | |

EPO FORM P0461

Für nähere Einzelheiten zu diesem Anhang : siehe Amtsblatt des Europäischen Patentamts, Nr. 12/82